# EUROPÄISCHE PATENTSCHRIFT

(11) **EP 1 588 906 B1**
(45) Veröffentlichungstag und Bekanntmachung des Hinweises auf die Patenterteilung: **18.04.2007**
(21) Anmeldenummer: 05004026.0
(22) Anmeldetag: 24.02.2005
(51) Int. Cl.: B60R 21/20

(54) **Airbagabdeckung**
Air bag cover
Couvercle pour sac gonflable

(30) Priorität: 26.03.2004 DE 102004014942
(43) Veröffentlichungstag der Anmeldung: 26.10.2005
(73) Patentinhaber: Lisa Dräxlmaier GmbH, 84137 Vilsbiburg (DE)
(72) Erfinder: Hehn, Wilhelm, 84168 Aham (DE); Sigl, Georg, 94424 Arnstorf (DE)
(74) Vertreter: HOFFMANN EITLE

(56) Entgegenhaltungen:
- WO-A-97/03866
- DE-A1- 19 738 493

## Beschreibung

### Technisches Gebiet

Die vorliegende Erfindung betrifft eine Airbagabdeckung, insbesondere für ein Kraftfahrzeug. Der Einsatz ist jedoch auch für andersartige Fahrzeuge, die zu Land, zu Wasser und zu Luft eingesetzt werden, denkbar. Eine Airbagabdeckung der vorliegenden Erfindung dient als Abdeckung eines zusammengefalteten Airbags, der beispielsweise in eine Instrumententafel oder ein Lenkrad eines Fahrzeugs integriert ist.

### Stand der Technik

Bei Instrumententafeloberteilen mit kaschierten Dekoren, wie zum Beispiel Leder bzw. Kunstleder werden Reißlinien, die das Öffnen der Airbagklappe bei der Auslösung des Airbags ermöglichen, nach dem heutigen Stand der Technik meist mittels genähter Reißlinien realisiert.

Es wird im Stand der Technik jedoch bereits aus Gründen der Haptik und Optik von Instrumententafeln angestrebt, diese sichtbaren Reißnähte zu vermeiden. Es gibt daher verschiedenste Bemühungen, die Dekorschicht gezielt so zu schwächen, dass diese Schwächung am Fertigteil von außen nicht sichtbar ist. So schlägt die DE 102 31 131 A1 eine Airbagabdeckung mit einer auf einem Abstandsgewirke angebrachten bzw. aufkaschierten Dekorschicht vor. Ferner sind Schwächungen sowohl in dem Abstandsgewirke, als auch der Dekorschicht vorgesehen. Damit diese Schwächungen jedoch von einer eine Betrachtungsfläche bildenden Dekorseite der Dekorschicht nicht sichtbar sind, wird die Schwächung von einer Seite der Dekorschicht eingebracht, die der Dekorseite entgegengesetzt angeordnet ist.

Somit gelingt es zwar, durch die Ausgestaltung der Schwächung und den Aufbau der gesamten Airbagabdeckung zu erreichen, dass die Schwächungen im Neuzustand des Fertigteils von außen nicht sichtbar sind. Tests haben jedoch gezeigt, dass diese Teile nach entsprechender Dauerbeanspruchung, wie zum Beispiel Klimalagerung, eine deutliche Abzeichnung der geschwächten Reißlinie auf der Bauteiloberfläche erkennen lassen.

Eine derartige Airbagabdeckung ist z.B. aus der gattungsbildenden WO 97/03866 bekannt. Dort ist eine Airbagabdeckung offenbart, die eine Dekorschicht mit einer eine Betrachtungsfläche bildenden Dekorseite, die an den Raum angrenzt in den sich der Airbag im Bedarfsfall entfaltet und einer der Dekorseite entgegengesetzten Airbagseite aufweist, wobei die Dekorschicht im Bereich einer Reißlinie zum Entfalten des Airbags eine Schwächung aufweist, die sich von der Airbagseite der Dekorschicht derart erstreckt, dass die Dekorschicht auf der Dekorseite im Wesentlichen unversehrt ist. Ferner weist die Airbagabdeckung zumindest eine zweite Schicht auf, die auf der Airbagseite der Dekorschicht angeordnet ist und einen Schwächungsbereich entlang der Reißlinie aufweist. Um die zweite Schicht zu bilden, wird die Dekorschicht hinterschäumt. Vor dem Hinterschäumen wird jedoch in der Dekorschicht die Schwächung vorgesehen. Damit sich diese Schwächung beim Hinterschäumen nicht mit Schaum zusetzt, ist ein Abdeckstreifen vorgesehen, der vor dem Hinterschäumen über Haltestreifen an der Airbagseite der Dekorschicht angebracht ist. Auch eine solche Airbagabdeckung führt jedoch zu den obigen Problemen.

### Darstellung der Erfindung

Daher liegt der vorliegenden Erfindung das technische Problem zugrunde, eine Airbagabdeckung zu schaffen, die keine auf der Dekorseite der Dekorschicht sichtbare Naht oder Schwächung aufweist, wobei die Schwächung auch bei Temperatur- und Feuchtigkeitseinfluss sowie Langzeitalterung und Dauerbelastungen unsichtbar bleibt, ohne dass die Airbagfunktionalität, d. h. das Aufreißen der Airbagabdeckung beim Auslösen bzw. Aufblasen des Airbags beeinträchtigt wird.

Dieses technische Problem wird durch eine Airbagabdeckung mit den Merkmalen des Patentanspruchs 1 gelöst. Vorteilhafte Weiterbildungen der vorliegenden Erfindung sind den Unteransprüchen zu entnehmen.

Der vorliegenden Erfindung liegt der Gedanke zugrunde, dass bei Dauerbelastungen, wie z. B. der Klimalagerung, die Dekorschicht einer starken Zugbeanspruchung in ihrem Materialaufbau selbst, sowie im Schichtaufbau/Kaschierverbund mit einer zweiten Schicht bzw. einem Abstandsgewirke ausgesetzt wird. Diese Zugbeanspruchung verursacht, dass die in die Dekorschicht eingebrachte Schwächung, die auf der die Betrachtungsfläche bildenden Dekorseite zu Beginn nicht sichtbar ist, wieder sichtbar wird. Der Grundgedanke der vorliegenden Erfindung liegt also darin, diesen Zugkräften der Dekorschicht entgegenzuwirken.

Zu diesem Zweck schlägt die vorliegende Erfindung eine Airbagabdeckung insbesondere für ein Kraftfahrzeug vor, die eine Dekorschicht aufweist. Die Dekorschicht wiederum weist eine Dekorseite auf, die beim Beispiel des Kraftfahrzeugs der Fahrgastzelle zugewandt ist, in die sich der Airbag im Bedarfsfall entfaltet. Die Dekorseite der Dekorschicht bildet eine Betrachtungsfläche, die von einem Fahrgast visuell und haptisch wahrgenommen wird. Darüber hinaus weist die Dekorschicht eine der Dekorseite entgegengesetzte Airbagseite auf. Die Airbagseite der Dekorschicht ist im eingebauten Zustand von der Fahrgastzelle nicht sichtbar. Die Dekorschicht kann beispielsweise aus Leder aufgebaut sein. Es sind jedoch auch Planware, künstliches Leder, Textilien, thermoplastische oder duromere Kunststoffe bzw. Kombinationen davon denkbar. Die Dekorschicht weist darüber hinaus im Bereich einer Reißlinie zum Entfalten des Airbags eine Schwächung auf. Diese Schwächung wird von der Airbagseite der Dekorschicht eingebracht und erstreckt sich derart, dass die Dekorschicht auf der Dekorseite im Wesentlichen unversehrt ist. Ferner umfasst die Airbagabdeckung der vorliegenden Erfindung zumindest eine zweite Schicht, die auf der Airbagseite der ersten Schicht angeordnet ist und einen Schwächungsbereich entlang der Reißlinie aufweist. Die zweite Schicht, die ein Abstandsgewirke sein kann, ist beispielsweise aus einem Gewebe, einer Folie oder einem Vlies gebildet. Das Gewebe oder das Vlies dieser Schicht kann ferner aus thermoplastischen oder duromeren Kunststoffen oder aus Metallen, Keramiken, Glas oder Naturstoffen aufgebaut sein. Um in der Dekorschicht auftretenden Zugkräften entgegenzuwirken, umfasst die Airbagabdeckung der vorliegenden Erfindung ferner eine Zwischenschicht. Diese Zwischenschicht ist zwischen der Dekorschicht und der zweiten Schicht angeordnet. Die Zwischenschicht ist im Bereich der Reißlinie im Wesentlichen unversehrt. Darüber hinaus weist die Zwischenschicht physikalische Eigenschaften auf, die zur Folge haben, dass die Zwischenschicht gegenüber Kräften in ihrer bzw. parallel zu ihrer Ebene (d. h. gegenüber Zugkräften) widerstandsfähig ist, wohingegen sie gegenüber Kräften senkrecht zu dieser Ebene einen relativ geringen Reißwiderstand aufweist. Die Zwischenschicht ist mit der Dekorschicht derart verbunden, dass durch die physikalischen Eigenschaften der Zwischenschicht zumindest im Bereich der Schwächung der Dekorschicht in der Zwischenschicht auftretenden Kräfte aufgenommen bzw. absorbiert werden können. Damit das Aufreißen der Airbagabdeckung beim Auslösen bzw. Aufblasen des Airbags nicht negativ durch die Zwischenschicht beeinflusst wird, weist diese gegenüber Kräften senkrecht zu ihrer Ebene einen geringen Reißwiderstand auf. Somit kennzeichnet sich die vorliegende Erfindung insbesondere durch das Einbringen einer in Zugrichtung der Dekorschicht relativ widerstandsfähigen Zwischenschicht ohne gezielte Schwächung im Bereich der Reißlinie zwischen dem geschwächten Dekor und der ebenfalls geschwächten zweiten Schicht zur Aufnahme der bei der Klimalagerung auftretenden Zugkräfte im Bereich der Reißlinienschwächung aus.

Vorteilhafter Weise kann die Zwischenschicht zum Beispiel aus Textil, Karton oder Spezialpapier, etc. aufgebaut sein und weist senkrecht zu den auftretenden Zugkräften und somit in Öffnungsrichtung der Airbagklappe einen relativ geringen Reißwiderstand auf, wohingegen sie in Zugrichtung der Zugkräfte widerstandsfähig ist.

Vorteilhafter Weise überbrückt die Zwischenschicht die Schwächung der Dekorschicht in einer Richtung senkrecht zu der Schwächung, parallel zu der Ebene der Dekorschicht. Mit anderen Worten weist die Zwischenschicht die Fähigkeit auf, die Schwächung bzw. den Schwächungsbereich der Reißlinie in Zugrichtung der Dekorschicht so zu überbrücken, dass eine durch die Schwächung verursachte Abzeichnung an der Dekorseite der Dekorschicht vermieden wird, jedoch das Öffnungsverhalten der Reißlinie nicht unzulässig negativ beeinflusst wird, d. h. das Öffnen der Airbagabdeckung reibungslos ermöglicht wird. Auch könnte gesagt werden, dass die Zwischenschicht die Schwächung gegenüber einem Auseinanderziehen durch Zugkräfte in der Dekorschicht mittels einer Art Brücke zusammenhält.

Vorteilhafter Weise ist die Zwischenschicht mit der Dekorschicht verklebt und der Verbund aus Dekorschicht und Zwischenschicht mit der zweiten Schicht kaschiert. Es ist jedoch auch denkbar, die zweite Schicht in einem Klebeverfahren aufzubringen.

Vorteilhafter Weise ist die Schwächung in der Dekorschicht ein Schnitt, der von der Airbagseite her durchgeführt wird und nicht bis zu der Dekorseite der Dekorschicht reicht, so dass er auf der Dekorseite nicht sichtbar ist. Der Schnitt erfolgt dabei senkrecht oder im Wesentlichen senkrecht zu der von der Dekorschicht aufgespannten Ebene.

Alternativ kann die Schwächung auch durch einen Laserstrahl oder durch Fräsen einer Reißlinie eingebracht werden.

Ferner ist vorteilhafter Weise eine Trägerschicht vorgesehen, welche die Dekorschicht, die zweite Schicht und die Zwischenschicht trägt. Diese Trägerschicht kann beispielsweise die Instrumententafel sein, die mit einem Airbagblech und einer Airbagfräsung versehen sein kann. Die Trägerschicht dient dabei als Verstärkungsschicht für die Airbagabdeckung.

### Kurze Beschreibung der Zeichnungen

Nachfolgend wird die vorliegende Erfindung rein beispielhaft anhand der begleitenden Figur beschrieben. Es zeigt:

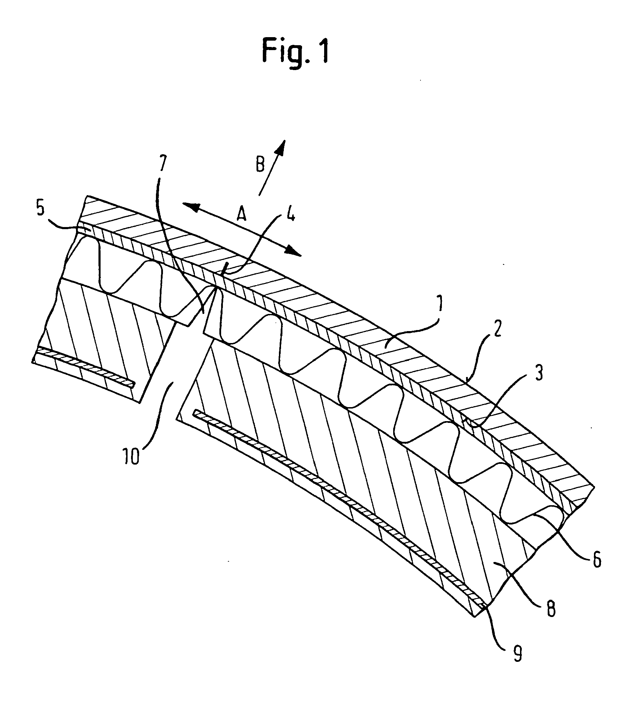

- Figur 1: eine Querschnittsansicht einer Airbagabdeckung gemäß der vorliegenden Erfindung.

### Beschreibung einer Ausführungsform der Erfindung

Figur 1 zeigt eine beispielhafte Ausführungsform der vorliegenden Erfindung im Querschnitt. Die in Figur 1 dargestellte Airbagabdeckung umfasst eine Dekorschicht 1, die eine Dekorseite 2 und eine Airbagseite 3 aufweist. Die Dekorseite 2 bildet eine Betrachtungsfläche, die beim Beispiel eines Kraftfahrzeugs dem Fahrzeug-Innenraum, d. h. der Fahrgastzelle zugewandt ist. Die Betrachtungsfläche unterliegt insbesondere hinsichtlich Haptik und Optik bzw. Erscheinungsbild besonders strengen Erfordernissen. Gerade bei Mittel- und Oberklassefahrzeugen des heutigen Stands der Technik sind die Anforderungsprofile bezüglich der Betrachtungsflächen von Interieurausstattungsteilen extrem hoch angesiedelt.

Die Dekorschicht 1 der vorliegenden Airbagabdeckung weist ferner im Bereich einer Airbagreißlinie eine Schwächung 4 auf. Bei der Schwächung 4 des vorliegenden Ausführungsbeispiels handelt es sich um einen Einschnitt in die Dekorschicht 1. Dieser Einschnitt erfolgt von der Airbagseite 3 der Dekorschicht aus und erstreckt sich im Wesentlichen senkrecht zu der Ebene der Dekorschicht 1 in Richtung der Dekorseite 2. Mit anderen Worten ist die Tiefenrichtung der Schwächung bzw. des Einschnitts 4 derart ausgerichtet, dass sie sich senkrecht zu der Ebene der Dekorschicht 1 erstreckt. Ferner ist die Schnitttiefe derart gewählt, dass die Dekorseite 2 der Dekorschicht 1 und damit die Betrachtungsfläche von der Fahrgastzelle aus betrachtet unversehrt bleibt.

Darüber hinaus ist bei der dargestellten Ausführungsform der vorliegenden Erfindung eine Zwischenschicht 5 vorgesehen. Die Zwischenschicht 5 ist dabei vorzugsweise auf die Dekorschicht 1 und insbesondere auf die Airbagseite 3 der Dekorschicht 1 aufgeklebt. Die Zwischenschicht 5 weist im Bereich des Einschnitts 4 im Wesentlichen keine Schwächungen auf, sondern ist in diesem Bereich vielmehr unversehrt. Ferner ist die Zwischenschicht 5 derart ausgestaltet, dass sie in Richtung von Zugkräften A der Dekorschicht 1 widerstandsfähig ist, wohingegen sie in einer Richtung B senkrecht zu den Richtungen der Zugkräfte A eine geringe Reißwiderstandsfähigkeit aufweist. So überbrückt die Zwischenschicht 5 die Schwächung 4 der Dekorschicht 1 und ist mit der Dekorschicht 1 beiderseits der Schwächung 4, d. h. der Seite links der Schwächung 4 und der Seite rechts der Schwächung 4 verbunden (links/rechts beziehen sich auf die Darstellung in Figur 1).

Auf den Verbund aus Dekorschicht 1 und Zwischenschicht 5, die in der dargestellten Ausführungsform miteinander verklebt wurden, ist ein Abstandsgewirke 6 aufkaschiert. Das Abstandsgewirke 6 weist im Bereich der Schwächung 4 der Dekorschicht 1 einen Schwächungsbereich 7 auf. Der Schwächungsbereich 7 und die Schwächung 4 werden zueinander ausgerichtet, so dass sie in Kombination die Reißlinie beim Entfalten des Airbags bilden. Dies wird bei der Produktion durch eine entsprechende Positionierung der jeweiligen Zuschnitte und durch Markierungen an den Zuschnitten außerhalb von Nutzungsbereichen der Zuschnitten erreicht.

Ferner ist die Kombination der Dekorschicht 1, der Zwischenschicht 5, sowie dem Abstandsgewirke 6 auf einem Träger 8 angeordnet. Alternativ kann das Abstandsgewirke 6 auch zuerst auf dem Träger aufgebracht sein und im Anschluss der Verbund aus Dekorschicht 1 und Zwischenschicht 5 darauf befestigt werden. Die Reihenfolge, in der die Schichten aneinander befestigt werden, kann beliebig erfolgen, und die vorliegenden Erfindung ist nicht auf eine spezielle Reihenfolge festgelegt. Vielmehr sind dem Fachmann verschiedenartige Möglichkeiten bekannt. Bei dem in der dargestellten Ausführungsform gezeigten Träger handelt es sich um die Instrumententafel eines Kraftfahrzeugs. Diese Instrumententafel ist mit einem Airbagblech 9 versehen, das zur Verstärkung der Airbagabdeckung dient. Ferner ist in der Instrumententafel 8 eine Airbagfräsung 10 vorgesehen, die der Reißlinie der Airbagabdeckung entspricht.

Das Abstandsgewirke 6 kann sowohl perforiert als auch geschnitten sein und es kann aus einem Gewebe, einer Folie oder ein Vlies aufgebaut sein. Ferner kann es sich bei der Dekorschicht 1 um Leder, Planware, Kunststoff, Textilien oder Kombinationen davon handeln. Auch kann ein separater Träger anstelle der Instrumententafel vorgesehen sein.

Kommt es unter bestimmten Klimabedingungen zu Zugkräften in der Ebene der Dekorschicht bzw. parallel dazu, wie sie durch die Pfeile A dargestellt sind, so würde sich die Schwächung 4 im Langzeittest derart verändern, dass sie von der Dekorseite 2 der Dekorschicht 1 sichtbar wäre. Gemäß der vorliegenden Erfindung werden jedoch derartige Zugkräfte A durch die Zwischenschicht 5, die in Zugrichtung widerstandsfähig ist und mit der Dekorschicht 1 verbunden ist, um den Einschnitt 4 zu überbrücken, kompensiert bzw. aufgenommen. Folglich wirken sich die Zugkräfte A nicht derart auf die Dekorschicht 1 aus, dass die Schwächung 4 auf der Dekorseite 2 sichtbar wird. Mit anderen Worten verhindert die Zwischenschicht ein Auseinanderziehen der Dekorschicht 1 im Bereich der Schwächung 4 unter Zugkräften und ein damit verbundenes Abzeichnen der Schwächung 4 auf der Dekorseite 2.

Wird im Gegensatz dazu der Airbag ausgelöst, so dass eine Kraft in der Richtung B auf die Airbagabdeckung ausgeübt wird, so dass die Dekorschicht 1 entlang der Schwächung 4 und das Abstandsgewirke 6 entlang dem Schwächungsbereich 7 aufreißt, so wird auch die Zwischenschicht 5, die in Bezug auf Kräfte B einen geringen Reißwiderstand aufweist, durchtrennt, so dass die Airbagabdeckung den Weg zum Entfalten des Airbags freigeben kann. Folglich dient die Zwischenschicht 5 der Aufnahme von Zugkräften A in der Dekorschicht 1 bzw. deren Kompensation ohne das Aufreißen der Airbagabdeckung 1 beim Entfalten des Airbags zu behindern. Durch diese Lösung wird ermöglicht, dass die Airbagabdeckung bzw. die Dekorseite 2 der Airbagabdeckung hinsichtlich Haptik und Optik dauerhaft einwandfrei bleibt, d. h. dass eine Schwächung 4 in der Dekorschicht 1 von der Dekorseite 2 her unsichtbar bleibt, ohne das Aufreißen der Airbagabdeckung beim Entfalten des Airbags zu behindern.

Die vorliegende Erfindung wurde anhand einer beispielhaften Ausführungsform beschrieben. Es ist jedoch ersichtlich, dass verschiedenartige Abänderungen und Modifikationen durchgeführt werden können, ohne die Grundidee der vorliegenden Erfindung zu verlassen, wie sie durch die begleitenden Patentansprüche definiert ist.

## Patentansprüche

1. Airbagabdeckung, insbesondere für ein Kraftfahrzeug umfassend:
eine Dekorschicht (1) mit einer eine Betrachtungsfläche bildenden Dekorseite (2), die an den Raum angrenzt, in den sich der Airbag im Bedarfsfall entfaltet, und einer der Dekorseite entgegengesetzten Airbagseite (3), wobei die Dekorschicht im Bereich einer Reißlinie zum Entfalten des Airbags eine Schwächung (4) aufweist, die sich von der Airbagseite der Dekorschicht derart erstreckt, dass die Dekorschicht auf der Dekorseite im Wesentlichen unversehrt ist,
zumindest eine zweite Schicht (6), die auf der Airbagseite der Dekorschicht angeordnet ist und einen Schwächungsbereich (7) entlang der Reißlinie aufweist,
eine Zwischenschicht (5), die zwischen der Dekorschicht und der zweiten Schicht angeordnet ist, im Bereich der Reißlinie im Wesentlichen unversehrt ist, Kräfte in ihrer Ebene oder parallel dazu aufnehmen kann, und unter einer Kraft im Wesentlichen senkrecht zu dieser Ebene reißt, **dadurch gekennzeichnet, daß** die Zwischenschicht derart mit der Dekorschicht verbunden ist, dass sie zumindest im Bereich der Schwächung der Dekorschicht in der Dekorschicht auftretenden Zugkräften entgegenwirkt.

2. Airbagabdeckung nach Anspruch 1, bei der die Zwischenschicht (5) aus Textil, Karton oder Papier ist.

3. Airbagabdeckung nach einem der vorstehenden Ansprüche, bei der die Zwischenschicht (5) die Schwächung (4) der Dekorschicht (1) in einer Richtung senkrecht zu der Schwächung, parallel zur Ebene der Dekorschicht überbrückt.

4. Airbagabdeckung nach einem der vorstehenden Ansprüche, bei der die zweite Schicht (6) ein Abstandsgewirke ist.

5. Airbagabdeckung nach einem der vorstehenden Ansprüche, bei der die Zwischenschicht (5) mit der Dekorschicht (1) verklebt ist und der Verbund aus der Dekorschicht und Zwischenschicht (1, 5) mit der zweiten Schicht (6) kaschiert ist.

6. Airbagabdeckung nach einem der vorstehenden Ansprüche, bei der die Schwächung (4) in der Dekorschicht (1) ein Einschnitt von der Airbagseite (3) her ist.

7. Airbagabdeckung nach einem der vorstehenden Ansprüche, bei der eine Trägerschicht (8) vorgesehen ist, welche die Dekorschicht (1), die zweite Schicht (6) und die Zwischenschicht (5) trägt.

8. Airbagabdeckung nach einem der vorstehenden Ansprüche, bei der die Zwischenschicht (5) gegenüber Zugkräften (A) in oder parallel zur Ebene der Dekorschicht (1) widerstandsfähig ist.

## Claims

1. Airbag cover, in particular for a motor vehicle, including:
a decorative layer (1) having a decorative side (2) which forms a viewing surface and which adjoins the space into which the airbag opens in case of need, and having an airbag side (3) opposite the decorative side, the decorative layer comprising, in the region of a breaking line for opening of the airbag, a weak portion (4) which extends from the airbag side of the decorative layer in such a way that the decorative layer on the decorative side is substantially intact,
at least one second layer (6) which is arranged on the airbag side of the decorative layer and comprises a weakening area (7) along the breaking line,
an intermediate layer (5) which is arranged between the decorative layer and the second layer, is substantially intact in the region of the breaking line, can absorb forces in its plane or parallel thereto, and tears under a force substantially perpendicularly to this plane,
**characterised in that** the intermediate layer is joined to the decorative layer in such a way that at least in the region of the weak portion of the decorative layer it counteracts tensile forces arising in the decorative layer.

2. Airbag cover according to claim 1, in which the intermediate layer (5) is made of textile, cardboard or paper.

3. Airbag cover according to any of the preceding claims, in which the intermediate layer (5) bridges the weak portion (4) of the decorative layer (1) in a direction perpendicularly to the weak portion, parallel to the plane of the decorative layer.

4. Airbag cover according to any of the preceding claims, in which the second layer (6) is a knitted fabric for spacing.

5. Airbag cover according to any of the preceding claims, in which the intermediate layer (5) is adhered to the decorative layer (1) and the composite consisting of the decorative layer and intermediate layer (1, 5) is laminated to the second layer (6).

6. Airbag cover according to any of the preceding claims, in which the weak portion (4) in the decorative layer (1) is a notch from the airbag side (3).

7. Airbag cover according to any of the preceding claims, in which a substrate layer (8) is provided, which carries the decorative layer (1), the second layer (6) and the intermediate layer (5).

8. Airbag cover according to any of the preceding claims, in which the intermediate layer (5) is capable of resisting tensile forces (A) in or parallel to the plane of the decorative layer (1).

## Revendications

1. Couvercle pour sac gonflable de sécurité, en particulier pour un véhicule automobile, comprenant :
une couche de décoration (1), avec une face de décor (2) formant une surface d'observation, délimitée à l'espace dans lequel le sac gonflable de sécurité se déploie en cas de besoin, et une face de sac gonflable de sécurité (3) opposée à la face de décoration, la couche de décoration présentant, dans la zone d'une ligne de déchirement, pour le déploiement du sac gonflable de sécurité, un affaiblissement (4) s'étendant depuis la face de sac gonflable de sécurité de la couche de décoration, de manière que la couche de décoration située sur la face de décoration soit sensiblement intacte ou non endommagée,
au moins une deuxième couche (6), disposée sur la face de sac gonflable de sécurité de la couche de décoration et présentant une zone d'affaiblissement (7) le long de la ligne de déchirement,
une couche intermédiaire (5), disposée entre la couche de décoration et la deuxième couche, dans la zone de la ligne de déchirement, est pratiquement intacte, pouvant supporter des efforts dans son plan ou parallèlement à celui-ci, et qui, sous l'effet d'une force, se décrire perpendiculairement par rapport ce plan, **caractérisé en ce que** la couche intermédiaire est reliée à la couche de décoration, de manière que, au moins dans la zone de l'affaiblissement de la couche de décoration, elle agisse à l'encontre des efforts de traction se produisant dans la couche de décoration.

2. Couvercle pour sac gonflable de sécurité selon la revendication 1, pour lequel la couche intermédiaire (5) est réalisée en textile, en carton ou en papier.

3. Couvercle pour sac gonflable de sécurité selon l'une des revendications précédentes, **caractérisé en ce que** la couche intermédiaire (5) ponte l'affaiblissement (4) de la couche de décoration (1) dans une direction perpendiculaire à l'affaiblissement, parallèlement au plan de la couche de décoration.

4. Couvercle pour sac gonflable de sécurité selon l'une des revendications précédentes, pour lequel la deuxième couche (6) est un tricot d'espacement.

5. Couvercle pour sac gonflable de sécurité selon l'une des revendications précédentes, pour lequel la couche intermédiaire (5) est collée à la couche de décoration (1) et le composite, formé de la couche de décoration et de la couche intermédiaire (1, 5), est scellé à la couche (6).

6. Couvercle pour sac gonflable de sécurité selon l'une des revendications précédentes, dans lequel l'affaiblissement (4) ménagé dans la couche de décoration (1) est une entaille partant de la face de sac gonflable de sécurité (3).

7. Couvercle pour sac gonflable de sécurité selon l'une des revendications précédentes, pour lequel est prévue une couche support (8), portant la couche de décoration (1), la deuxième couche (6) et la couche intermédiaire (5).

8. Couvercle pour sac gonflable de sécurité selon l'une des revendications précédentes, pour lequel la couche intermédiaire (5) est résistante aux efforts de traction (A) exercés dans ou parallèlement au plan de la couche de décoration (1).
